# EUROPEAN PATENT APPLICATION

(11) **EP 2 045 978 A2**
(43) Date of publication of application: **08.04.2009**
(21) Application number: 08017261.2
(22) Date of filing: 01.10.2008
(51) Int. Cl.: H04L 12/56

(54) **Network device and modification method of the connections of at least an user socket to a service**

(30) Priority: 05.10.2007 IT MI20071924
(71) Applicant: BEA SRL, 20149 Milano (IT)
(72) Inventor: Piccini, Alberto, 10128 Torino (IT)

(57) **Abstract**

Network device (10) comprising a plurality of input ports (13) of connection cables and a plurality of output ports (15) of connection cables.
The network device (10) comprises a programmable permutation circuit (30), in particular of firmware type, integrated internally to the same network device (10), which connect the plurality input ports (13) to the plurality output ports (15).
Modification method of the connections of at least an user socket (90) in particular of type RJ45 or RJ11, to a service which in particular a data connection or a telephone connection, the method comprises the following phases:
a) electronically disable/enable at least an electrical connection between the at least an user socket (90) and a connection port to the service,
b) electronically enable/disable at least an electrical connection between the at least an user socket (90) and another connection port to a service.

## Description

The present invention refers to a network device and to a modification method of the connections of at least an user socket to a service.

In the modern offices plant of structured wiring are realized, intended to support the realization of different type of local networks, included for example the telephone network.

Typically in a building one or more server cabinet and a telephone switchboard are present which are connected to each floor by means of a plurality of vertical connection cables.

The cables besides can not be longer than 100 m for reasons of signal loss.

The vertical connection cables are connected to network devices which for example an hub or a switch, known with the English terms "hub" and "switch", which permit the connection a the sharing of services which the connection to the internet network or the connection to a local network in such a way to share hardware devices, data and software applications.

Besides in each floor are present a plurality of user sockets for the connection for example of computers, telephones and other electronic devices.

Besides each user socket is connected to a patch panel by means of a horizontal patch cable.

In each floor of the building the patch panels are connected to said network devices by means of a plurality of horizontal patch cables, known also with the English terms "patch cords".

Therefore connecting a path cable from a computer to a user socket, and connecting another patch cable from the patch panel to one of the network devices connected to the vertical connection cables, it is created an electrical connection that permit to connect the computer to the internet network.

Similarly the same happen for the connection of a telephone to a telephone switchboard.

Dependently by how horizontal patch cables and vertical patch cables are connected it is possible to obtain that a determined user socket is usable for example as data line or as telephone line.

Therefore in order to modify the configuration of that determined user socket it is necessary to modify the connections of horizontal patch cables connected to the same in a way to connect said determined user socket for example to a telephone line instead that for example to a data line or vice versa.

A disadvantage is that it is necessary a manual operation performed by an operator for modifying the connections of patch cables connected to that determined user socket.

Another disadvantage is that this type of operation if frequently performed determines very high times and costs for the maintenance services, which often are higher than the costs of the components.

Purpose of the present invention is that to realize a network device that permits the modification of the function of an user socket, for example from data socket to telephone socket, avoiding manual operations of modification of the connections of the horizontal patch cables, in particular of the horizontal patch cables that connect the patch panels to the network devices.

Another purpose is that to realize a network device that avoid the manual intervention and the manual permutation of the patch cables which connect the network devices to the patch panels.

Another purpose is that to realize a network device that avoid the necessity of the patch cables of connection between the network devices and the patch panels.

Another purpose is that to realize a network device that permit the control and the modification of the connection between the network devices and the user sockets avoiding the necessity of a manual intervention on the same connection cables.

Another purpose is that to realize a modification method of the connection of at least an user socket to a service which for example a data connection or a telephone connection that permit to avoid manual operations of modification and permutation of the patch cables which connect said at least an user socket to said service.

These objectives according to the present invention are reached by providing a network device and a modification method of the connections of at least an user socket to a service as specified in claims 1 and 14.

Other features of the invention are pointed out in the following claims.

The features and the advantages of a network device and of a modification method of the connections of at least an user socket to a service according to the present invention will appear more evident from the following illustrative and not limitative description, referred to the attached schematic drawings in which:

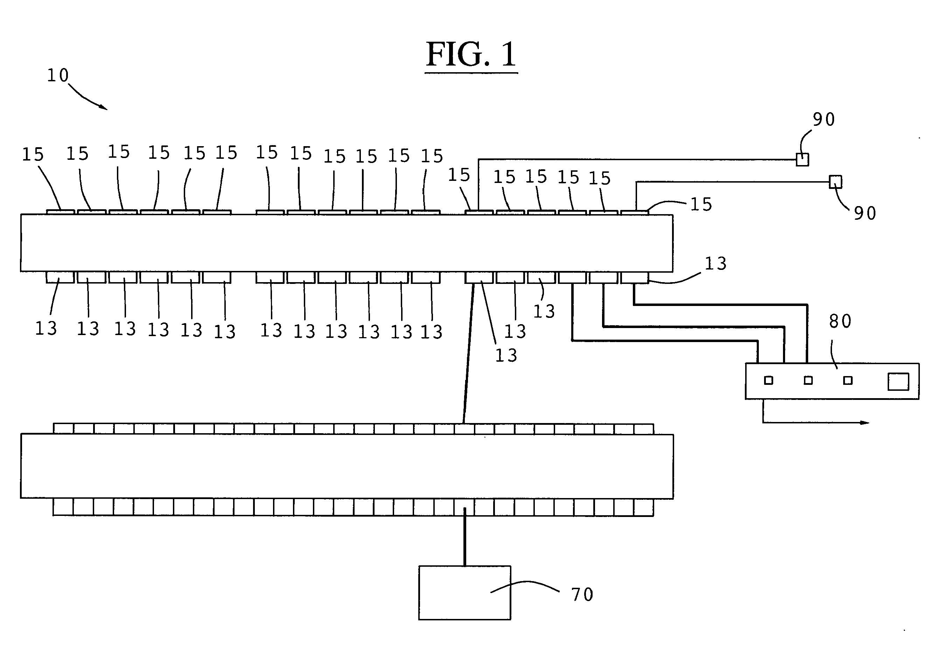

figure 1 is a schematic top view of a preferred form of embodiment of a network device according to the present invention;

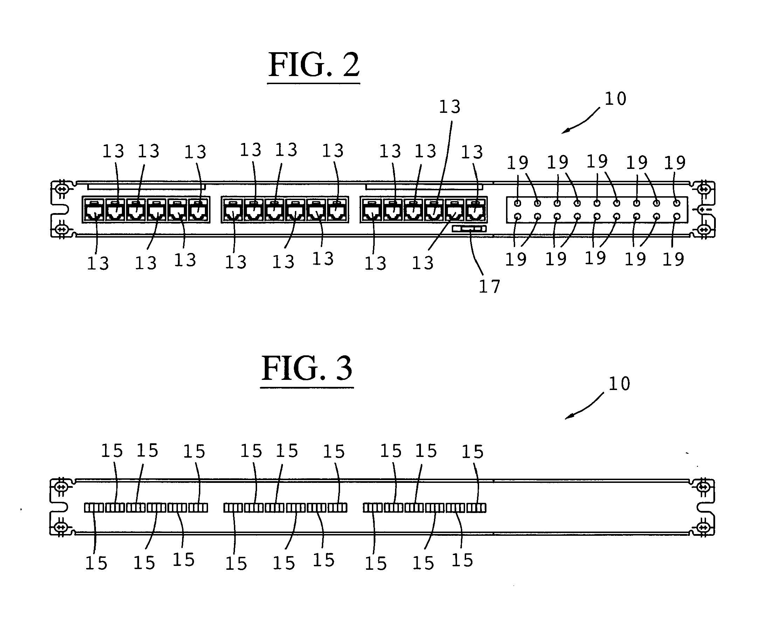

figure 2 is a raised frontal view of a preferred form of embodiment of a network device according to the present invention;
figure 3 is a raised frontal view from behind of a preferred form of embodiment of a network device according to the present invention;
figure 4 is a schematic sectioned top view of a preferred form of embodiment of a network device according to the present invention in which are shown only a part of the internal connections, and in particular the connections of an input port with a plurality of output ports.

With reference to the figures, it is shown a network device 10 comprising a plurality of input ports 13 of connection cables and a plurality of output ports 15 of connection cables.

According to the present invention said network device 10 comprises a programmable permutation circuit 30 integrated internally to the same which connect said plurality of input ports 13 to said plurality of output ports 15.

Advantageously this solve the problem to avoid a manual permutation of the connection patch cables to the services.

Besides this avoid the necessity of the same patch cables because the connection it is obtained through said programmable permutation circuit 30.

In particular said programmable permutation circuit 30 is a programmable permutation firmware circuit 30.

According to a preferred form of embodiment said programmable permutation circuit 30 connect each input port 13 to said plurality of output ports 15 in particular by means of a correspondent plurality of electric connections which are electronically enabled and disabled in such a way to have an high transmission and receiving rate.

Advantageously this determines also the possibility to transmit without delay because the connections are electric, while the electronic activation and deactivation determines the possibility to program the connections between the plurality of input ports 13 and the plurality of output ports 15.

Advantageously this permit therefore also the programming of the connection to services which for example the connection to a data network or to a telephone network.

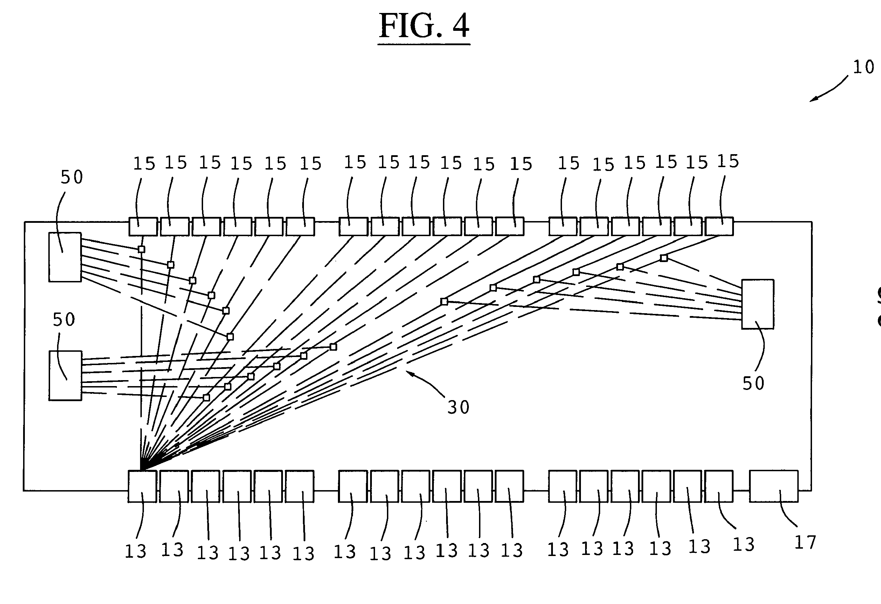

With reference to figure 4 for simplicity it is shown a part of said programmable permutation circuit 30, in particular the connection of an input port 13 with said plurality of output ports 15.

Besides as shown in figure 4 according with a preferred form of embodiment said network device 10 is connected to a plurality of user sockets 90, and in particular it is also associated to a telephone switchboard 70 and it is connected to a modem 80 by means of a plurality of patch cables.

In particular for user socket 90 it is meant a computer wall socket or a wall socket of a telephone or of other network devices and/or of control and management, as for example telephone switchboards, anti-theft and guard devices, entry phones and video entry phones, or a socket of an electronic device as for example a printer, a scanner, a fax, etc. connectable to the network.

Simply modifying electronically the internal electric connections of said programmable permutation circuit 30 it is possible to modify the connection of a plurality of user sockets 90 to a plurality of services which for example an internet connection and a connection to the telephone network.

Advantageously in this way it is possible to avoid to manually modify the external connections of the patch cables for obtaining the same result.

Besides in particular said network devices 10 comprises a permutation matrix stored internally to the same in a static memory of which the same is preferably provided.

Advantageously in this way it is possible to maintain stored in a permanent way the activated and deactivated connections between the plurality of input ports 13 and the plurality of output ports 15.

In this way also turning the power off and on the network device 10 it is capable to maintain the configuration and of restore the electric connections between the plurality of input ports 13 and the plurality of output ports 15.

Advantageously therefore a tension drop do not cause the loss of the settings and of the configurations of the ports 13 and 15 of the network device 10.

According a preferred form of embodiment said network device 10 comprises configuration and modification electronic means 50, not shown, which are preferably associated to said programmable permutation circuit 30 in order to permit the configuration and the modification of a plurality of electric connections of the same.

In other terms said configuration and modification electronic means 50 permit to electronically configure and to electronically modify the electrical connections between said plurality of input ports 13 and said plurality of output ports 15 of said network device 10.

Preferably said configuration and modification electronic means 50 are associated also to a permutation matrix stored in a static memory of which said network device 10 is in particular provided, and besides said configuration and modification electronic means 50 permit the configuration and the modification of the same through a remote computer.

According a preferred form of embodiment said network device 10 comprises a plurality of electronic switches, shown in figure 4, each of which is connected to each electric line of connection between each input port 13 and each output port 15, besides said electronic switches being electronically enabled and disabled in particular by means of said configuration and modification electronic means 50.

According to a preferred form of embodiment said network device 10 comprises a patch panel integrated in the same.

Advantageously said network device 10 includes therefore also the functions and the features of a patch panel.

According to a preferred form of embodiment said network device 10 includes a switch, that is a switch, integrated in the same.

According to an advantageously form of embodiment said network device 10 comprises a switch integrated with a patch panel.

In particular said switch is integrated in series with said patch panel.

Preferably said switch is integrated in series with said patch panel by means of said programmable permutation circuit 30.

In other terms said network devices 10 comprises a patch panel and a switch integrated between them in series by means of said programmable permutation circuit 30.

In particular said plurality of input ports 13 are a plurality of ports of said switch, and said plurality of output ports 15 are a plurality of ports of said patch panel suitable to be connected to a correspondent plurality of user sockets 90.

In particular said programmable permutation circuit 30. comprises a plurality of electrical connections which connect said plurality of input ports 13 of said switch and said plurality of output ports 15 of said patch panel.

Advantageously said plurality of electric connections are changeable, or they are electronically enabled and disabled, through the modification, also by means of a remote computer, of a permutation matrix stored internally to said network devices 10.

In particular said plurality of electric connections are configurable and changeable, or they are electronically enabled and disabled, through said configuration and modification electronic means 50.

Preferably said plurality of input ports 13 is suitable to be connected to telephone cables and/or to data transmission cables and/or to audio/video receiving/transmission cables and/or receiving/transmission cables of signals of sensors.

Preferably said plurality of input ports 13 comprises ports of type RJ45 and/or RJ11.

Preferably said plurality of input ports 13 comprises ports comprises at least a connection port 17 to a further network device.

In particular said at least a connection port 17 is at least an optical connection port or of type RJ45.

According to a preferred form of embodiment said network device 10 comprises a modem integrated internally to the same.

Preferably said plurality of output ports 15 comprises a plurality of insulation displacement contacts in particular a plurality of contacts of type IDC for the connection preferably to data cables coming from correspondent user sockets 90.

According to a preferred form of embodiment said network device 10 comprises releasable electric connection means, which are preferably integrated with said plurality of output ports 15, in such a way to quickly replace the electronic components internal to said network device 10 in case of damage or of an upgrading of the network device 10.

In particular said releasable electric connection means comprise a plurality of releasable electric connectors directly connected to said plurality of output ports 15.

Advantageously this permit to avoid to cabling newly the output cables connected to said plurality of output ports 15.

According to a preferred form of embodiment of the present invention said network device 10 comprises a plurality of leds 19 (light emitting diodes) which are preferably connected to said plurality of output ports 15 in order to point out the activation and the functioning of each output port 15.

According to another aspect of the present invention it is furnished a modification method of the connections of at least an user socket 90, in particular of type RJ45 or RJ11, to a service as for example a data connection or a telephone connection which permit to avoid manual operation of modification and permutation of the patch cables connected between said at least an user socket 90 and said service.

In other terms it is furnished a modification method of the function of at least an user socket 90, in particular of type RJ45 or RJ11, connected to network services which for example an internet connection and a telephone connection.

In particular for user socket 90 it is meant a wall socket of a computer or a wall socket of a telephone or of other network devices and/or of control and management, which for example telephone switchboard, anti-theft and guard devices, entry phones and video entry phones, or a socket of an electronic device as for example a printer, a scanner, a fax, etc. connectable to the network.

According to the present invention said modification method of the connections comprises the following phases:
a) electronically disable/enable at least an electrical connection between said at least an user socket 90 and a connection port to said service,
b) electronically enable/disable at least an electric connection between said at least an user socket 90 and another connection port to a service.

In this way it is advantageously possible to change the function of at least an user socket 90 from data socket for example to telephone socket, and vice versa.

Besides in the case in which said at least an user socket 90 is a telephone socket, it is possible to modify only its internal telephone number, electronically modifying the electrical connection of said at least an user socket 90 to a telephone switchboard.

According to a preferred form of embodiment said method comprises a phase of c) electronically disable/enable at least an electrical connection between at least an output port 15 and at least an input port 13 of said network device 10.

Preferably said method comprises a phase of d) disable/enable through configuration and modification electronic means 50 at least an electric connection of a programmable permutation circuit 30 internal to a network device 10, said internal programmable permutation circuit 30 being connected to at least a least an input port 13 and to at least an output port 15 of said network device 10.

According to a preferred form of embodiment said method comprises a phase of e) electronically enable/disable at a first predetermined time, in particular through electronic programmable means 50, at least an electrical connection between said at least an user socket 90 and a connection port to said service.

Preferably said method comprises a phase of f) electronically disable/enable at a second predetermined time, in particular through electronic programmable means 50, at least an electric connection between said at least an user socket 90 and a connection port to said service.

Advantageously through said method is possible to check and electronically modify also by means of a remote computer the electrical connections and the configuration of at least an user socket 90 to a service which an internet connection or a telephone connection.

Advantageously in this way it is also possible an hourly planning of the connections and of the sharing rules of at least a service, in particular a network service or a telephone service, connected to at least an user socket 90 in particular of type RJ45 or RJ11.

This determines numerous advantages as in terms of flexibility as in terms of security, because it is possible to disable a part of the connections for example after the working hours.

Besides it is possible to program and regulate the accesses to services which internet network and telephone network of each user socket connected in particular by means of a remote computer, avoiding expensive manual interventions on the connection cables.

In this way it has been seen that a network device and a modification method of the connections of at least an user socket to a service according to the present invention achieves the objectives previously mentioned.

The network device and the modification method of the connections of at least an user socket to a service of the present invention thus conceived can undergo to numerous modifications and variations, all included in the same inventive concept.

Furthermore, in practice the materials used, as well as their dimensions and the components, can vary according to the technical needs.

## Claims

1. Network device (10) comprising a plurality of input ports (13) of connection cables and a plurality of output ports (15) of connection cables, **characterized by** comprising a programmable permutation circuit (30), in particular of firmware type, integrated internally to said network device (10), and in that said programmable permutation circuit (30) connect said plurality of input ports (13) to said plurality of output ports (15).

2. Network device (10) according to claim 1, **characterized in that** said permutation circuit (30) connect each input port (13) to said plurality of output ports(15) in particular by means of a plurality of electric connections which are electronically enabled and disabled.

3. Network device (10) according to claim 1 or 2, **characterized by** comprising a permutation matrix (32) stored internally to the same in a static memory.

4. Network device (10) according to any one claims from 1 to 3, **characterized by** comprising configuration and modification electronic means (50) which are preferably associated to said programmable permutation circuit (30) in order to permit the configuration and the modification of a plurality of electric connections to the same.

5. Network device (10) according to claim 4, **characterized in that** said configuration and modification electronic means (50) are associated also to a permutation matrix stored in a static memory, and **characterized in that** said electronic means (50) permit the configuration and the modification of the same also through a remote computer.

6. Network device (10) according to any one of the claims from 1 to 5,
**characterized by** comprising a patch panel integrated in the same.

7. Network device (10) according to any one of the claims from 1 to 6, **characterized by** comprising a switch integrated in the same.

8. Network device (10) according to any one of the claims from 1 to 7, **characterized in that** said plurality of input ports (13) is suitable to be connected to telephone cables and/or to data transmission cables and/or to audio/video receiving/transmission cables and/or receiving/transmission cables of signals of sensors.

9. Network device (10) according to any one of the claims from 1 to 8, **characterized in that** said plurality of input ports (13) comprises ports of type RJ45 and/or RJ11.

10. Network device (10) according to any one of the claims from 1 to 9, **characterized in that** said plurality of input ports (13) comprises at least a connection port (17) to a further network device, in particular said at least a connection port (17) being at least an optical connection port or of type RJ45.

11. Network device (10) according to any one of the claims from 1 to 10, **characterized by** comprising a modem integrated internally to the same.

12. Network device (10) according to any one of the claims from 1 to 11, **characterized in that** said plurality of output ports (15) comprises a plurality of insulation displacement contacts in particular a plurality of contacts of type IDC for the connection preferably to data cables coming from correspondent user sockets (90).

13. Network device (10) according to any one of the claims from 1 to 11, **characterized by** comprising releasable electric connection means, which are preferably integrated with said plurality of output ports (15).

14. Modification method of the connections of at least an user socket (90) in particular of type RJ45 or RJ11, to a service which in particular a data connection or a telephone connection, said modification method of the connections **characterized by** comprising the following phases:
a) electronically disable/enable at least an electric connection between said at least an user socket (90) and a connection port to said service,
b) electronically enable/disable at least an electric connection between said at least an user socket (90) and another connection port to a service.

15. Modification method of the connections according to claim 14, **characterized by** comprising a phase of c) electronically disable/enable at least an electric connection between at least an output port (15) and at least an input port (13) of a network device (10).

16. Modification method of the connections according to claim 14 or 15, **characterized by** comprising a phase of d) disable/enable through configuration and modification electronic means (50) at least an electric connection of a programmable permutation circuit (30) internal to a network device (10), said internal programmable permutation circuit (30) being connected to at least an input port (13) and at least an output port (15) of said network device (10).

17. Modification method of the connections according to any one of claims from 14 to 16, **characterized by** comprising a phase of e) electronically enable/disable at a first predetermined time in particular through electronic programmable means (50), at least an electric connection between said at least an user socket (90) and a connection port to said service.

18. Modification method of the connections according to claim 17, **characterized by** comprising a phase of f) electronically disable/enable at a second predetermined time, in particular through electronic programmable means (50), at least an electric connection between said at least an user socket (90) and said connection port to said service.
